(19) **Europäisches Patentamt**

**European Patent Office**

**Office européen des brevets**

(11) Publication number: **0 116 601**
**B1**

(12) **EUROPEAN PATENT SPECIFICATION**

(45) Date of publication of patent specification: **27.12.89**

(51) Int. Cl.⁴: **A 01 K 11/00, G 09 F 3/00**

(21) Application number: **83902723.2**

(22) Date of filing: **29.07.83**

(86) International application number:
**PCT/US83/01170**

(87) International publication number:
**WO 84/00468 16.02.84 Gazette 84/05**

(54) **ANIMAL IDENTIFICATION DEVICE AND APPLICATOR THEREFOR.**

(30) Priority: **29.07.82 US 402910**

(43) Date of publication of application:
**29.08.84 Bulletin 84/35**

(45) Publication of the grant of the patent:
**27.12.89 Bulletin 89/52**

(84) Designated Contracting States:
**AT BE CH DE FR GB LI LU NL SE**

(56) References cited:
**EP-A-0 031 227**
**AU-A- 11 261**
**AU-B- 242 379**
**GB-A-1 053 454**
**GB-A-1 187 313**
**US-A-2 184 060**
**US-A-3 022 648**
**US-A-3 641 804**
**US-A-3 812 859**
**US-A-4 147 168**
**US-A-4 209 924**

(73) Proprietor: **HOWE, Steve R.**
**P.O. Box 177**
**Longmont, CO 80502 (US)**
(73) Proprietor: **HOWE, Philip D.**
**P.O. Box 177**
**Longmont, CO 80502 (US)**

(72) Inventor: **HOWE, Steve R.**
**P.O. Box 177**
**Longmont, CO 80502 (US)**
Inventor: **HOWE, Philip D.**
**P.O. Box 177**
**Longmont, CO 80502 (US)**

(74) Representative: **Kopacz, William James**
**83 avenue Foch (3 étage)**
**F-75116 Paris (FR)**

Courier Press, Leamington Spa, England.

## Description

Technical field

This invention relates to animal identification devices and applicators therefor.

Background of the invention

Identification devices are used for numerous types of animals, including cattle, cows, sheep and swine, and have been used for a number of years. Earlier devices included metal clips which were pressed onto the ear of the animal. The identification device of the Norman J. Hayes U.S. patent No. 3,260,007, which has become known throughout the United States and in other countries, comprises the combination of a pin and a tag. The tag, formed of a softer plastic, is provided with a body on which numbers or other identifying indicia may be placed, connected by a neck with a socket on the outside of the tag and a hole extending to said socket. The pin, formed of harder plastic, is provided with a conical point at one end of a stem, with an annular base at the opposite end of the stem. An applicator, which operates similarly to a pair of pliers, is provided with a spring clip for holding the base of the pin against one arm of the applicator, with the opposite arm receiving the socket, with the ear of the animal between the conical point of the pin and the tag. The handles of the applicator are moved together to move the arms toward each other, so that the conical point of the pin will be forced through the ear, then into the hole in the tag and finally into the socket, to retain the tag and pin together. One disadvantage of the pin formed entirely of hard plastic necessary to provide sufficient hardness and stength to permit the conical point and stem of the pin to be forced through the ear and into the socket of the tag, has been the fact that since the base of the pin, which engages the ear of the animal, rather than yielding somewhat with movement of the ear, remains rigid and thereby tends to irritate the ear. This may produce a wound which may become infected. An additional problem, albeit at times somewhat minor in nature, is the fact that, as the conical point of the pin passes through the ear, flesh from the hole is pushed toward the side of the ear adjacent the tag. Although the tag is formed of soft plastic and therefore does not tend to irritate the ear as much as a hard plastic part would, the wound at the exit end is more pronounced than at the entrance end, due to the tendency for flesh to be pushed through the hole in the ear. Thus, a close fitting tag may tend to retard the circulation of air to the wound at the exit end of the hole in the ear, thereby slowing the process of healing and increasing the possibility of infection. Of course, with the socket on the outside, the tag will lie flat against the ear, thereby reducing the possibility of the tag being caught by a fence, tree limb or the like and tending to pull out of or damage the animal's ear.

Additional types of tags and applicators have been developed, including that of U.S. patent No. 3,812,859, which utilizes a spring clip of a type similar to that of U.S. patent No. 3,260,007 to hold a socket end of a tag mounted on one arm of the applicator, and a piercing and support needle mounted on the opposite arm of the applicator. This needle engages a central hole in a pin which is formed of soft plastic but which must be reinforced by the needle in order to pierce the ear and which also must be provided with a conical metal ring at the outer end of the conical tip, so that the extreme end of the piercing needle will first penetrate the ear, followed by the metal ring and then the remainder of the pin. The pin may be a separate pin, or may be molded integrally with another tag, also formed of soft plastic. Although this construction permits the soft plastic to engage the ear at the entrance end of the hole to the ear, the applicator must be disinfected between each installation of the tag. The tip of the piercing and support needle enters the ear of each animal in turn, so that any infection or the like present in one animal is likely to be carried to another animal. The inconvenience of dipping the applicator in an antiseptic solution between each installation of an identification device, as well as the inconvenience of carrying around the antiseptic solution in a container which must be opened to permit the stem of the applicator to be dipped into the solution and then closed to prevent the entry of dust, debris from an animal or the like, are both deterrents to the use of such a system. The socket for the pin is on the inside of the tag, thereby reducing the possibility of infection due to lack of air circulation.

Another type of identification device is disclosed by U.S. patent No. 4,021,952, which device includes a pair of tags, one of which is provided with a socket adjacent one end and the other of which is provided with a laterally extending stem formed integrally therewith. Each of these tags and the respective socket and stem are formed of soft plastic. The stem has an enlarged head and an axial hole, into which a metal pin having a conical tip may be slipped, with the base of the conical tip having a diameter corresponding to the enlarged head on the tag stem. The metal stem of the pin reinforces the stem of the tag, while the metal conical tip of the pin not only pierces the ear but also displaces the hole leading into the socket so that the enlarged head of the hollow stem of the second tag will enter the socket and retain the two tags together. The metal pin is removed after a tag is installed, by making the stem of the pin longer than the stem of the second tag so that the metal pin, after installation of the tag, can be pushed from the opposite side of the ear to move the conical tip away from the socket. Thus, the conical tip can then be grasped by a workman and the installation pin removed. Of course, either the installation pin must be discarded after each installation or sterilized before reuse. The socket on the tag of the U.S. patent 4,021,952 is also placed adjacent the ear, so as to minimize the area of the tag which engages the ear around the hole produced by installation, thereby permitting better circulation of air to the wound at the exit end of the hole in the ear. However, such a socket, normally produced by a boss or ring having a thickness which is considerably greater than the thickness of the tag, spaces the tag from the ear a corresponding distance, thereby increasing the possibility of the tag catching on a fence wire or the like and becoming lost or producing damage to the ear of the animal.

A variation of the support type of tag stem is shown by U.S. patent No. 4,209,924, in which a steel point, closed and conical, is molded to the end of a hollow neck or stem of soft plastic, while an installation rod, as on a tool, is inserted in the hollow neck to push the tip and stop through the ear, then remove the rod without the need for sterilization between tag installations.

Another animal identification tag is shown in EP—A—31227. This tag is for use with an attachment device having a stem surmounted by a generally conical member and having means for penetrating an ear or other portion of an animal for attaching the tag to the portion of the animal. The tag includes a body having at least one area on which indica may be placed, a socket extending laterally from said body and having a well adjacent the outer end of the socket, the body and socket having a hole communicating with the well and through which the generally conical member of the attachment device may be moved after penetration of the ear or other portion of said animal.

EP—A—31 277, discloses also a pin device for attaching the animal identification tag to an ear of an animal and includes a tapering point on the end of a stem. The larger end of the point has a greater diameter than the stem whereby the point and stem may be moved through the ear and into engagement with receiving means which is then retained on the opposite side of the ear by the attaching device. The point and stem are formed of relatively hard material. There is included a base extending transversely to the stem and having at least a layer of softer material than the stem adapted to contact the ear. There is included a button integral with the stem at the opposite end from the tapering point and formed of the relatively hard material.

Among the objects of this invention are to provide a novel animal identification device; to provide a novel applicator particularly adapted for installation of such identification device; to provide such an identification device which includes a tag which is provided with a socket on the side opposite the ear for reception of the head of an attachment pin or the like; to provide such a tag having such a socket but which permits circulation of air to the wound at the exit end of the hole in the ear of the animal; to provide a novel pin which has a conical point on the stem of sufficient strength, such as corresponding to that of hard plastic, for penetration of the ear and attachment to a tag having a socket therefor, but which is provided with a soft plastic surface at the base of the pin or of a second tag from which the pin extends; to provide such a pin which has a construction which readily transmits the force produced by an applicator for a tag and pin combination; to provide such an applicator which is particularly adapted to install the tag and pin of this invention; to provide such an applicator which more securely holds the pin or a second tag having a pin extending therefrom; to provide the combination of an applicator, tag and pin or second tag having a pin which avoids the necessity for sterilization of any part following installation; to provide such an applicator which more securely receives a tag having a socket on the side away from the ear of the animal; and to provide each such tag with a socket, a pin with a conical point or tag provided with a stem having a conical point and applicator particularly adapted for installation of the tag and pin or dual tag combination, each of which is readily manufactured and operates in an effective and efficient manner.

Summary of the invention

An animal identification tag is provided with a socket having a well for receiving a conical point or the like of a stem of a pin on the opposite side of the tag from an ear or the like of an animal. This tag is provided with a plurality of passages for permitting a flow of air to the area around the stem, to promote healing of a wound produced by the conical point when passing through the ear and perhaps extruding flesh from the hole so made. These passages may be provided by undulations, such as alternating troughs and ridges extending toward the hole on the side of the tag which abuts the ear. An attachment pin, which extends from a base or from a head of a second tag, is formed of a hard material, such as plastic, and includes a stem extending from a conical point to a button which is imbedded in a softer plastic. The softer plastic engages the ear to reduce irritation sometimes produced by a hard plastic of the pin. To facilitate adherence of the soft plastic base to the hard plastic button, the stem has a groove adjacent the button, the side of the button opposite the stem is convex and the button has a series of circumferentially spaced holes. An applicator for installing the pin and tag has a pair of arms, connected across a common pivot joint to handles for opening and closing the arms. One arm has a platform for the pin, provided by laterally extending wings and a rim around each side and its rear which acts as a stop for the pin. Each arm has a clip with a front slot and a tab at each side of the slot for respectively engaging the base of the pin on one arm, and the head of a tag on the other arm. Each clip is pivotal by side flanges on a pin and engages a compression spring at the rear. The opposite arm has a longitudinal slot to receive the socket of the tag and a ledge around the socket engaged by the head of the tag. A perpendicular edge, around the ledge, engages the head of the tag to position the hole leading to the socket in alignment with the pin carried by the first arm.

According to the invention, however, the animal identification tag includes the features that the side of the tag opposite said socket comprises a smooth undulating surface having an outer periphery, the surface having outwardly radiating ridges adjacent outwardly radiating troughs. With the ridges adapted to press against the ear or other portion of the animal to support the tag, said ridges and said troughs both extending to the outer periphery of the surface, whereby the troughs provide air passages through the outer periphery of the tag side when the ridges are pressed against the ear, the troughs and ridges having smooth transitions between them to thereby define the smooth undulating surface.

According to the invention, the device for attaching an animal identification tag to an ear or similar portion of the body of an animal includes the feature that the button has a lateral dimension greater than said larger end and is provided with holes extending therethrough outwardly from the stem of the point, the base being molded directly around the button with the softer material enclosing the button and filling the holes in the button to thereby contribute to the stability of the pin.

As discussed above, U.S. 3,560,007 discloses an applicator for installing an identification device. This applicator having all the feature of the preamble of claims 8 comprises a pair of arms wherein one arm has at its outer end a channel shaped platform for receiving the base of the pin of the device and a clip for holding the base on the platform. The opposite arm of the applicator has at its outer end a channel shaped platform for receiving the socket of the tag and a clip for holding the socket in the channel shaped platform, as well as a slot which receives the point of the pin after the point moves through the socket.

The applicator of claim 8 is characterized in that the flat, rimless surface of said opposite arm is a U-formed platform for supporting the head of the tag by engagement with the surface of the head when the tag is held by the clip.

Brief description of the drawings

Fig. 1 is a front elevation of the head of an animal, such as a steer or cow, to an ear of which an identification tag of this invention is attached by a pin of this invention.

Fig. 2 is a longitudinal section, taken along line 2—2 of Fig. 1 and on an enlarged scale, of the tag and pin installation and a portion of the ear of the animal.

Fig. 3 is a fragmentary rear elevation, on a further enlarged scale, of the head of the tag of Fig. 2.

Fig. 4 is an oblique top plan view, at 60° from vertical, of the portion of the tag shown in Fig. 3.

Fig. 5 is an oblique cross section taken along line 5—5 of Fig. 3.

Fig. 6 is a top plan view of the pin, with a base thereof in section, taken along line 6—6 of Fig. 2 and on a further enlarged scale.

Fig. 7 is a fragmentary elevation, showing the upper portion of a second tag which carries a pin of Figs. 2 and 6, and on a reduced scale from that of Fig. 6 but partially in section taken at the position of line 7—7 of Fig. 6.

Fig. 8 is a side elevation, in closed position, of an applicator of this invention, particularly adapted for installation of the pin and tag of Figs. 1—7.

Fig. 9 is a side elevation of the applicator of Fig. 8, in open position, with a pin and tag of this invention mounted therein, prior to installation of the pin and tag in the ear of an animal, with the tag being shown in condensed form.

Fig. 10 is a bottom plan view of a portion of a tag retaining clip of the opposite arm of the applicator of Figs. 8 and 9.

Fig. 11 is a front end view of the applicator of Fig. 8.

Fig. 12 is a perspective view, on an enlarged scale, of the pin receiving end of one arm of the applicator of Figs. 8 and 9.

Fig. 13 is a top plan view of the pin receiving arm of the applicator of Figs 8 and 9.

Fig. 14 is a bottom plan view of the tag receiving arm of the applicator of Figs. 8 and 9.

Fig. 15 is a transverse section taken along line 15—15 of Fig. 13.

Fig. 16 is a transverse section taken along line 16—16 of Fig. 14.

Detailed description of the invention

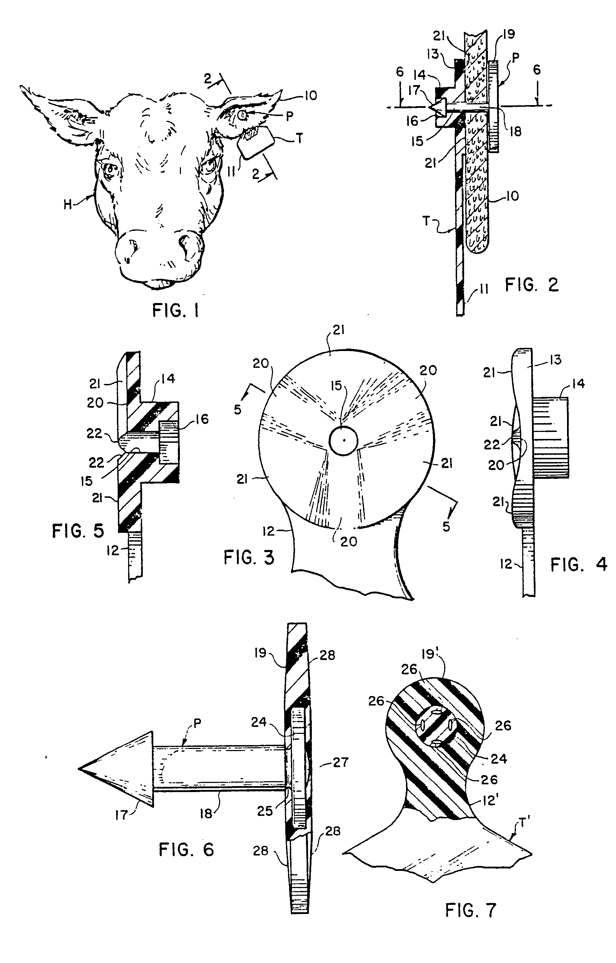

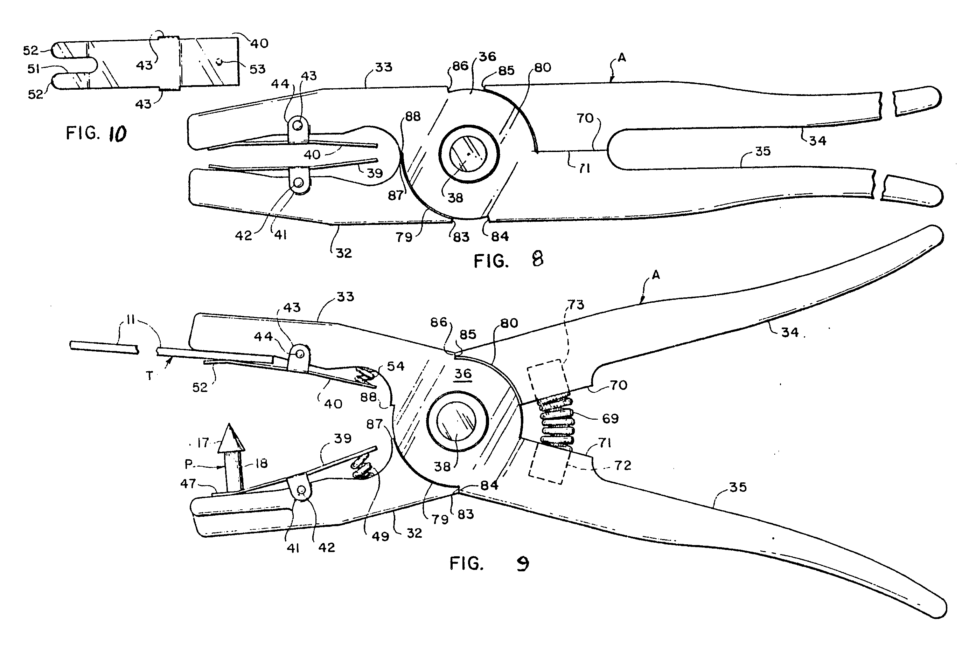

As illustrated in Fig. 1 of the drawings, a tag T of this invention may be attached by a pin P to an ear 10 of the head H of an animal such as a steer, cow, calf, sheep or a member of the swine family. The relative size of the tag may decrease as the size of the animal decreases. Each of the pin P and tag T is an improvement over the pin and tag of U.S. patent No. 3,260,007. Thus, the tag includes a body 11 on which a numeral or other identifying indicia may be placed, with a neck 12 tapering upwardly at each side to an annular head 13 from which a socket 14 extends outwardly at a central position. A central axial hole 15 leads to an outer well 16, for a purpose described later. The pin P, utilized with the tag T of this invention, may be similar to the type shown by the aforesaid U.S. patent 3,260,007, in order to overcome the disadvantages thereof through ventilation by the construction of tag T, in accordance with this invention, which produces faster healing of the wound produced by penetration of the ear by the pin. However, the preferred construction of the pin, in accordance with this invention, as in Figs. 2 and 6, include a conical point 17 and a stem 18 which are formed of a hard plastic, such as glass filled nylon, while stem 18 is attached to a base 19. As the pin point 17 is pushed through the ear and into the hole 15 of the tag, it will expand the socket 14, then permit the socket to retract as soon as the point 17 reaches the well 16, in which the base of the conical point is seated to prevent withdrawal of the pin. At that time, a portion of stem 18 will occupy hole 15, as in the position of Fig. 2. Pin P may be installed by an applicator similar to that of the aforesaid U.S. patent 3,260,007, but preferably further constructed in accordance with this invention, as exemplified in Figs. 8—16.

A disadvantage of making the entire pin P of hard plastic in order to provide a conical point which is sufficiently hard and a stem which is sufficiently strong to penetrate the ear and engage socket 14, is that a base 19 of the tag, when made of hard plastic, will rub against the side of the ear and thereby rub a sore spot on the ear, which may become infected. However, the tag T, which engages the opposite side of the ear, does not produce the same effect since it is formed of a relatively soft plastic material, such as polyurethane. Thus, the base 19 of the pin is formed of a soft plastic, in accordance with this invention, as described later.

In accordance with this invention, as shown in Figs. 3—5, a series of troughs 20, such as three, extend radially inwardly from the periphery of head 13 to the inside of hole 15, as well as from the area of neck 12, with the troughs 20 being equally spaced and being separated by ridges 21 which abut the ear of the animal, as will be evident from Fig. 2. As shown, troughs 20, as well as ridges 21, are disposed 120° apart, although the number and spacing of the troughs and ridges may vary from that shown. Preferably, the outer edge of one trough is centered on neck 12 to insure air flow to the bottom of the area around hole 15, with the opposite ridge 21 centered at the upper end of head 13. Thus, with the three troughs and ridges shown, the centers of the remaining two troughs will be at 60° from upper center. The oblique top plan of Fig. 4 is a view looking directly into the trough 20 of Fig. 3, the center of which is located 60° to the right of upper center thereof. Each ridge 21 narrows as it approaches the center hole 15, so that each trough 20 which flanks it, will have a width, at the hole 15, approaching the diameter of the hole. The inner end 22 of each ridge 21 may occupy a minimum portion of the circumference of the hole, as in Figs. 4 and 5, and the end 22 may slant outwardly to provide additional space around hole 15. Between the bottom of each trough 20 and the crest of each ridge 21, the lateral contour may curve smoothly as in Fig. 4, to form undulations. Thus, the troughs 20 provide ventilation to the area of the ear 10 which is penetrated by pin P upon installation, i.e. around the stem 18 where the conical point 17 has pushed through the skin and perhaps wedged outwardly a circle of flesh. The presence of the troughs 20, which occupy only a portion of the periphery of the head 13 and the circumferential extent as well as the width of which may vary from that shown, insures that air for ventilation of the wound produced by penetration of the pin through the ear will not only assist in curing the wound, but also act to deter or prevent an infection which is sometimes produced with such a type of ear tag.

As stated previously, the base 19 of the pin is formed of a soft plastic, conveniently the same material, such as polyurethane, as that utilized in making the tag T and is molded directly onto the stem 18, around a button 24 of the stem which extends laterally outwardly within the base 19. A groove 25 extends around the stem adjacent the button 24 and four or other suitable number of holes 26, such as oval, extend through the button, as in Fig. 7, in order to improve the attachment of the softer plastic of base 19 to the stem and to insure the maximum amount of soft plastic engaging the ear of the animal. Conveniently, the underside of button 24 may be convex at 27, opposite stem 18, while the periphery of the base 19, generally outwardly from the button 22, may be provided with annular sides 28 which taper outwardly toward each other.

Point 17, stem 18 and button 24 of the pin P may be molded in a tag T' of Fig. 7, corresponding in size and shape or differing from tag T of Fig. 1 but shown in Fig. 7 as having a corresponding neck 12' extending to a pin base 19' which is integral with the remainder of the tag. Except where joined to neck 12', base 19' is similar to base 19 of the pin of Fig. 5, while button 24 and the remaining parts, i.e. the conical point 17, stem 18 and groove 25, may be the same as shown in Fig. 6.

The tag T of this invention may be produced by injecting the plastic into a mold cavity having essentially the same size and shape as the tag, with allowance for shrinkage, with the mold being separable longitudinally into two halves, i.e. around the edges of the tag, for removal of the completed tag. Conveniently, a plunger which pushes the completed tag out of one half of the mold, may be cylindrical and engage the outer end of the socket 14, so as to push the tag off the pins by which the hole 15 and well 16 are produced. Additional ejection pins may engage appropriate spots on the body 11 of the tag.

The composite pin of this invention may similarly be produced in a split mold but having movable inserts which initially form the button 23 and groove 24 when hard plastic, such as glass filled nylon ®, is injected into the mold, as at the button, but are then withdrawn to leave a cavity corresponding to base 19, after which a softer plastic, such as polyurethane, may be injected into the base-forming cavity. The alternative, of course, would be to form the conical point 17, stem 18, button 23 and groove 24 of hard plastic and then insert the stem and button into a mold cavity in which the base 19 is formed. However, this latter is especially time consuming and thus considerably more expensive than the molding of the pin in one mold cavity.

The molding machines having the trade marks Boy, Farrel, McNeil, Nissei and Von Dorn have been found to be suitable for this purpose. When the pin is incorporated in a second tag, such as tag T' of Fig. 6, a similar mold may be utilized, except that the cavity for forming the tag is similar to the portion of a mold cavity in which the neck 12 and body 11 are formed.

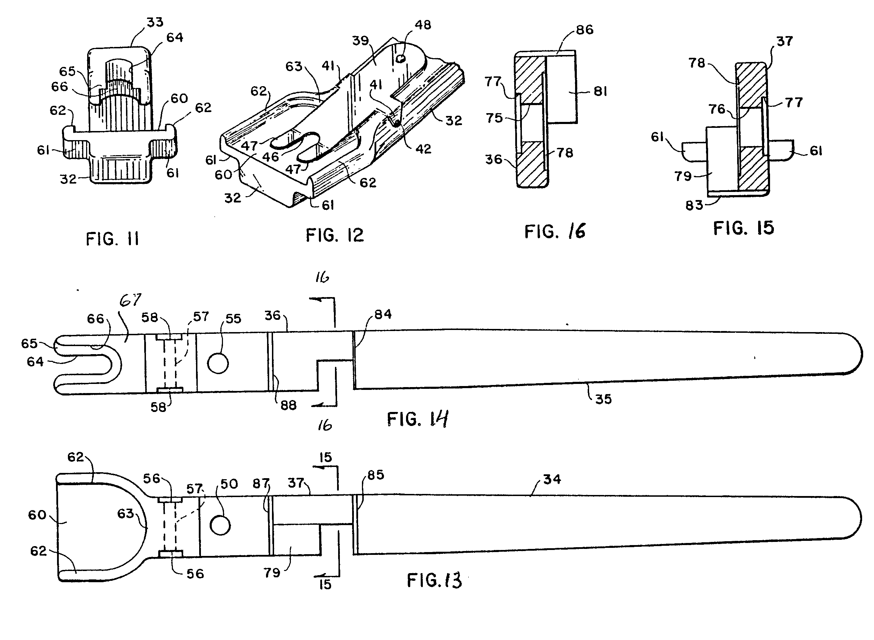

An applicator, by which the pin and tag are held and then the pin thrust through the ear of the animal to lock the pin to the tag with the stem of the pin remaining in the ear, may be constructed in accordance with this invention, such as applicator A illustrated in Figs. 8—16. As shown in Figs. 8 and 9, an applicator A, similar to a pair of pliers and often referred to as pliers, is provided with an arm 32 adapted to carry the pin P and an opposed arm 33 adapted to carry the tag T. Arm 32 is moved by a handle 34 and arm 33 is moved by a handle 35, with a pivot ring 36 of Fig. 9 connecting arm 33 with handle 35 and an opposed, corresponding pivot ring 37, shown in Figs. 13 and 15, connecting arm 32 with handle 34. A pin 38 extends through an appropriate hole in each of the opposed rings 36 and 37, as described later. After the pin and tag have been placed on opposite sides of the ear and the ear 10 disposed in the space between the pin P and tag T, with the applicator in the position of Fig. 9, handles 34 and 35 may be moved toward each other, so that arms 32 and 33 will pivot about pin 38, from the position of Fig. 9 to the position of Fig 8 and pin P will be thrust through the ear of the animal and into socket 14 of the tag, so that cone tip 17 will seat in well 16.

Pin P is retained on arm 32 by a clip 39 and tag T is retained on arm 33 by a corresponding clip 40. Clip 39 has angular flange 41 at each side and is pivoted on a pin 42 which extends through each flange adjacent the inner edge of the latter, pin 42 conveniently being a spring-type pin, i.e. in a hollow rolled form with a longitudinal slot and formed of resilient material with the ends turned outwardly to clamp against the respective flange 41. Similarly, clip 40 for tag T is provided with a flange 43 at each side, each of which is pivoted on pin 44, which extends through the arm 33 adjacent the inner surface thereof and may be formed in the same manner as pin 42. A slot 46 in the front end of clip 39, as in Fig. 12, accommodates stem 18 of pin P and preferably has a width a few thousandths of an inch greater than stem 18 of the pin so as to center the pin. A pair of tabs 47 of clip 39 engage the base 19 of the pin, on each side of slot 46. A punched offset 48 at the opposite end of clip 39, as in Fig. 12, engages one end of coiled spring 49 of Fig. 9, which urges the tabs 47 of the clip against the base of the pin, while a well 50 of Fig. 13 receives the opposite end of spring 49. A slot 51 in the outer end of clip 40, shown in Fig. 10, has sufficient width to clear the base of cone tip 17 of pin P as it moves into the socket of the tag, while a pair of tabs 52 engage the inner surface of head 13 of the tag on each side of slot 51. Similar to clip 39, a punched offset 53 in the opposite end of clip 40 engages one end of a spring 54, the opposite end of which is received in a well 55 of Fig. 14. To accommodate flanges 41 of clip 39, a pair of oppositely disposed grooves 56 of Fig. 13 extend downardly from the upper edge of arm 32 past a transverse hole 57, shown in dotted lines and through which pin 42 of Figs. 8 and 9 extends, while a corresponding pair of grooves 58 of Fig. 14 extend upwardly, on each side, from the lower edge of arm 32 past a similar transverse hole 57, through which pin 44 extends, to accommodate flanges 43.

The outer end of arm 32, as in Figs. 11, 12 and 13 and in accordance with this invention, is provided with a platform 60 on which the base 19 of pin P rests and against which the pin is held by clip 39. The front end of platform 60 is open, as shown, while a wing 61 extends laterally from each side of arm 32 to enlarge the width of the platform. A rim 62 at each side facilitates the placement of the pin on the platform, the distance between the rims being greater than the diameter of head 13 of the pin, while an arcuate curved rear wall 63 may be positioned so that when the edge of head 13 engages the rear wall, the pin will be centered longitudinally, the lateral centering of the pin by tabs 47 of clip 39 being described previously.

As in Figs. 11 and 14, the outer end of arm 33 is provided with a slot 64 which accommodates movement of the pin through the tag socket and thus has a width approximately the diameter of well 16 in socket 14. Spaced from the underside of arm 33 a distance corresponding to the height of socket 14 of tag T, is a ledge 65 against which the end of socket 14 abuts, to resist the thrust of the pin P through the hole 15 in the tag and into the well 16. The remainder of head 13 abuts the underside of arm 33 being a rimless U-formed platform and the tag is retained by clip 40. The inner edge 66 of the groove formed by ledge 65, as in Fig. 14, may be positioned so as to be abutted by socket 14 and thereby position the tag socket in alignment with pin P. It will be understood that, although the parts associated with arms 32 and 33 are described with reference to the top and bottom, or underside, of each, these terms are only relative and are based upon the position in which the parts of the applicator are shown in Figs. 8 and 9. Thus, it will be understood that, when the applicator A is utilized to install a tag in the ear of an animal, as in Fig. 1, the applicator may be held in a vertical position, with the handles 34 and 35 upright and beneath the ear, as well as in a horizontal position or any angle between vertical and horizontal. Also, the ear of the animal may be twisted so that the applicator may be held at a different angle to the horizontal.

Additional parts of the applicator include a spring 69 which extends between abutments 70 and 71 of handles 34 and 35, respectively, to urge apart the handles and therefore the respective arms 32 and 33. The opposite ends of spring 69 may be received in a well 72 in handle 34 and a well 73 in handle 35, each of these wells being shown in dotted lines in Fig. 9. Pin 38 of Figs. 8 and 9 extends through a hole 75 in ring 36 of Fig. 16 and a hole 76 in ring 37 of Fig. 15. When the rings 36 and 37 are interfitted together, pin 38 may be inserted into the holes 75 and 76, aligning these holes as it does so. One end of pin 38 may be conveniently provided with a flange adapted to engage a countersink 77 at the outer edge of either hole 75 or 76 with the opposite end of pin 38 having a conventional slot or groove into which a conventional split retaining ring may be spread by a conventional tool for insertion, the retaining ring being accommodated by the opposite countersink 77. An annular groove

78, on the inside of each ring 36 and 37, as in Figs. 15 and 16, accommodates a conventional bowed spring washer which maintains a slight clearance between rings 36 and 37, thereby increasing the ease with which the applicator may be operated. For more accurate interfitting of the two halves of the applicator together, arm 32 may be provided with an arcuate surface 79 and handle 34 with an opposed arcuate surface 80, for encircling opposed arcuate portions of ring 36, as in Figs. 8 and 9, while arm 33 may be provided with an arcuate surface 81 of Fig. 17 and handle 35 with an arcuate surface corresponding to surface 79 but in opposed position to surface 80, for encircling opposed arcuate portions of ring 37. To limit the opening movement of the arms and handles, an abutment 83 may be formed at the rear edge of surface 79 of handle 34 and an abutment 84 on handle 35, while an abutment 85 may be formed at the front edge of arcuate surface 80 and an abutment 86 on arm 33. When moved to the open position of Fig. 9, abutments 83 and 84 and abutments 85 and 86 will be in engagement, as shown. For limiting closing movement of the arms and handles, abutments 87 and 88 may be formed on arms 32 and 33, respectively, so that these abutments will engage when the applicator is moved to the closed position of Fig. 8. The relative position of abutments 83 and 86 are shown in Figs. 15 and 17, respectively, of abutments 85 and 87 in Fig. 14 and of abutments 84 and 88 in Fig. 14.

As will be evident, the applicator of this invention requires only that the pin and tag be placed in position, the arms of the applicator placed over the ear or the like of the animal and the handles squeezed together, whereupon the applicator may be slipped off the ear. This ease in use contrasts with those applicators having a stem attached to one jaw, which reinforces the pin, but which requires the applicator to be fully opened again, after closing, before it can be removed.

Although a preferred embodiment of a pin, tag and applicator of this invention have been illustrated and described and additional embodiments also illustrated and described, it will be understood that other embodiments may exist and variations thereof used, within the scope of the claims.

**Claims**

1. An animal identification tag (T) for use with an attachment device (P) having a stem (18) surmounted by a generally conical member (17) and having means for penetrating an ear or other portion of an animal for attaching said tag to said portion of said animal, including a body having at least one area (11) on which indicia may be placed, a socket (14) extending laterally from said body and having a well (16) adjacent the outer end of said socket, said body and socket having a hole (15) communicating with said well (16) and through which said generally conical member of said attachment device may be moved after penetration of the ear or other portion of said animal, said tag characterized in that the side of the tag opposite said socket comprises a smooth undulating surface (Fig. 3) having an outer periphery, said surface having outwardly radiating ridges (21) adjacent outwardly radiating troughs (20), with the ridges adapted to press against the ear or other portion of the animal to support the tag, said ridges and said troughs both extending to the outer periphery of said surface, whereby the troughs provide air passages through the outer periphery of the tag side when the ridges are pressed against said ear, the troughs and ridges having smooth transitions between them to thereby define said smooth undulating surface.

2. A pin device (P) for attaching an animal identification tag (T) to an ear or similar portion of the body of an animal, including a tapering point (17) on the end of a stem (18), the larger end of said point having a greater diameter than said stem whereby said point and stem may be moved through an ear or the like of an animal and into engagement with receiving means of said animal identification tag which is then retained on the opposite side of said ear or the like by said attaching device, said point and said stem being formed of relatively hard material, a base (19) extending transversely to said stem and having at least a layer of softer material than said stem adapted to contact the ear or the like of said animal, a button (24) integral with said stem at the opposite end from said tapering point and formed of said relatively hard material, the device characterized in that said button (24) has a lateral dimension greater than said larger end and said button is provided with holes (26) extending therethrough outwardly from said stem of said point, said base being molded directly around the button with the softer material enclosing the button and filling the holes in the button to thereby contribute to the stability of the pin.

3. An attachment device as defined in claim 2, wherein said relatively hard and said softer material each comprise a plastic.

4. An attachment device as defined in claim 2, wherein: said stem is provided with an annular groove (25) adjoining said button.

5. An attachment device as defined in claim 2, wherein: the area of said button opposite said stem is generally convex.

6. An attachment device as defined in claim 2, wherein: said base is generally circular.

7. An attachement device as defined in claim 2 wherein: said base comprises a portion of a tag having at least one surface for the placement of indicia.

8. An applicator for installing an identification device in an ear (10) or the like of an animal, said device including pin means having a stem (18) provided with a base (19) at one end and a conical point (17) at the opposite end, the larger end of said conical point being greater in diameter than said stem, and tag means (T) having a head (13) connected to a body (11) extending laterally from said head and an outside cylindrical socket (14) of smaller lateral dimensions than said head, said head (13) being provided with a hole (15) through which said conical point (17) and stem (18) may be moved and said socket (14) having a well (16) for receiving said conical point (17), said applicator including a pair of arms (32, 33), each connected to a handle (34, 35) and pivotally mounted so that said arms (32, 33) may be pivotally moved between generally open and generally closed positions by said handles (34, 35), one of said arms (32) having at its outer end a platform (60) for receiving the base (19) of said pin means and resiliently urged clip means (39) for holding said base (19) of said pin means on said platform (60), said platform having abutment means (63) for said base (19) of said pin means for positioning said base (19) longitudinally of said arm (32) and said clip means having a slot (46) for positioning said stem and point laterally of said arm (32), the opposite arm (33) having at its outer end a longitudinal U-formed portion having a flat, rimless surface (67) facing the platform (60) of the first arm (32), a longitudinal groove for receiving the socket (14) of the tag, a ledge (65) at the bottom of the groove against which the end of the socket (14) of the tag can abut and a clip (52) for holding the socket in the groove characterized in that:

the flat, rimless surface (67) of said opposite arm (33) is a U-formed platform for supporting the head (13) of the tag by engagement with the surface of the head when said tag is held by said clip.

9. An applicator as defined in claim 8, for installing an identification device which includes pin means having a stem provided with a base at one end provided with a layer of softer material, both beneath said base and the portion of said base engageable with said ear or the like, characterised in that:

said arms are constructed and arranged so that the plane of said platform of said one arm diverges from the plane of said second platform of said opposite arm in a direction away from the pivotal axis of said arms when said arms are apart prior to installing said identification device; and

the planes of said platforms are convergent in said direction away from said pivotal axis when said arms are in a closed position.

**Patentansprüche**

1. Tieridentifikationsmarke (T) zur Anwendung mit einer Befestigungseinrichtung (P) mit folgenden Merkmalen:

die Befestigungseinrichtung (P) weist einen Stempel (18) auf, der von einem im Großen und Ganzen konischen Glied (17) überragt wird und einer Einrichtung zum Durchdringen eines Ohrs oder eines anderen Teils eines Tieres gesitzt, um die Marke an dem Teil des Tieres zu befestigen

die Marke (T) weist einen Körper mit mindestens einem Bereich (11) auf, an welchem Kennzeichen angebracht sein können; eine Muffe (14) erstreckt sich seitlich von dem Körper und besitzt eine eingesenkte Bohrung (16) benachbart dem äußeren Ende der Muffe;

der Körper und die Muffe weisen eine mit der Einsenkbohrung (16) in Verbindung stehende Bohrung (15) auf, durch welche nach Durchdringen des Ohres oder des anderen Teils des Tieres das im Großen und Ganzen konische Glied der Befestigungseinrichtung geschoben werden kann;

gekennzeichnet durch fogende Merkmale der Marke:

die Seite der Marke gegenüber der Muffe weist eine glatte gewellte Oberfläche (Fig. 3) mit einem äußeren Rand auf;

die Oberfläche besitzt radial nach außen laufende Wellenberge (21) und daneben radial nach auswärts laufende Wellentäler (20), wobei die Wellenberge ausgebildet sind, gegen das Ohr oder das andere Teil des Tiers zu drücken, um die Marke zu tragen;

die Wellenberge und Wellentäler erstrecken sich jeweils bis zum äußeren Rand der Oberfläche, wobei die Wellentäler Luftdurchlaßkanäle durch den äußeren Rand der Seite der Marke bilden, wenn die Wellenberge gegen das Ohr gedrückt werden;

die Wellentäler und Wellenberge gehen glatt ineinander über, um die glatte Wellenoberfläche zum bestimmen.

2. Eine stiftförmige Einrichtung (P) zur Befestigung einer Tieridentifikationsmarke (T) am Ohr oder einem ähnlichen Körper eines Tieres, mit folgenden Merkmalen:

die stiftförmige Einrichtung (P) weist eine sich verjüngende Spitze (17) am Ende eines Stempels (18) auf;

das größere Ende der Spitze hat einen größeren Durchmesser als der Stempel, wobei die Spitze und der Stempel durch ein Ohr o.dgl. eines Tieres und in Eingriff mit einer Aufnahmeeinrichtung der Tieridentifikationsmarke bewegt werden können, welches dann auf der gegenüberliegenden Seite des Ohres o.dgl. durch die Befestigungseinrichtung gehalten wird;

die Spitze und der Stempel sind aus relativ hartem Material gebildet;

eine Basisplatte (19) erstreckt sich quer zu dem Stempel und weist mindestens eine Schicht weicheren Materials als der Stempel auf um zum Kontakt mit dem Ohr o.dgl. des Tieres geeignet zu sein;

ein mit dem Stempel integral ausgebildeter Knopf (24) an dem der Spitze gegenüberliegenden Ende ist aus einen relativ harten Material geformt;

gekennzeichnet, durch folgende Merkmal der Einrichtung:

der Knopf (24) hat eine seitliche Ausdehnung größer als das größere Ende (der Spitze), der Knopf ist mit Löchern (26) versehen, die sich nach auswärts von dem Stempel der Spitze durch den Knopf erstrecken;

die Basisplatte ist direkt um den Knopf gegossen, wobei das weichere Material den Knopf einschließt und die Löcher in dem Knopf ausfüllt, um so zur Stabilität des Stiftes beizutragen.

3. Befestigungseinrichtung nach Anspruch 2, dadurch gekennzeichnet, daß das relativ harte und das relativ weiche Material jeweils einen Kunststoff aufweisen.

4. Befestigungseinrichtung nach Anspruch 2, dadurch gekennzeichnet, daß der Stempel mit einer ringförmigen Nut (25) benachbart dem Knopf versehen ist.

5. Befestigungseinrichtung nach Anspruch 2, dadurch gekennzeichnet, daß die Fläche des Knopfes gegenüber dem Stempel im Großen und Ganzen konvex ist.

6. Befestigungseinrichtung nach Anspruch 2, dadurch gekennzeichnet, daß die Basisplatte im Großen und Ganzen kreisförmig ist.

7. Befestigungseinrichtung nach Anspruch 2, dadurch gekennzeichnet, daß die Basisplatte einen Teil einer Marke bildet, die wenigstens eine Oberfläche für die Unterbringung von Zeichen aufweist.

8. Eine Anbringungseinrichtung zum Installieren einer Identifikationseinrichtung in einem Ohr (10) o.dgl. eines Tieres, mit folgenden Merkmalen:

die Einrichtung weist eine Stifteinrichtung mit einem Stempel (18), der mit einer Basisplatte (19) an einem Ende versehen ist, und eine konische Spitze (17) am anderen Ende auf;

der Durchmesser des größeren Endes der konischen Spitze ist größer als derjenige des Stempels;

die Einrichtung umfaßt auch eine Anhängereinrichtung (T), die einen Kopf (13), einen daran befestigten Körper (11), der sich seitlich von dem Kopf erstreckt, und eine außenseitig zylindrische Muffe (14) von kleineren seitlichen Dimensionen als der Kopf aufweist;

der Kopf (13) ist mit einer Bohrung (15) versehen, durch welche die konische Spitze (17) und der Stempel (18) geschoben werden können und die Muffe (14) besitzt eine Ansenkung (16) zur Aufnahme der konischen Spitze (17);

die Anbringungseinrichtung weist zwei Arme (32, 33) auf, die jeweils mit einem Griff (34, 35) verbunden sind und schwenkbar aneinander befestigt sind, so daß die Arme (32, 33) zwischen in Großem und Ganzen einer offenen und einer geschlossenen Stellung durch die Griffe (34, 35) bewegt werden können;

eine der Arme (32) weist an seinem äußeren Ende eine Plattform (60) zur Aufnahme der Basisplatte (19) der Stifteinrichtung und eine federnd nachgiebige Klammereinrichtung (39) zum Halten der Basisplatte (19) der Stifteinrichtung an der Plattform (60) auf;

die Plattform besitzt eine Anschlagseinrichtung (63) für die Basisplatte (19) der Stifteinrichtung, um die Basisplatte (19) längs des Armes (32) festzulegen, und die Klammereinrichtung besitzt einen Schlitz (46), um den Stempel und die Spitze seitlich des Armes (32) festzulegen;

der gegenüberstehende Arm (33) weist an seinem äußeren Ende ein in Längsrichtung U-förmig gestaltetes Teil mit einer flachen randlosen Oberfläche (67), die der Plattform (60) des ersten Arms (32) gegenübersteht, eine längliche Nut zur Aufnahme der Muffe (14) des Anhängers, einen Vorsprung (65) am Boden der Nut, gegen welchen das Ende der Muffe (14) des Anhängers seinen Anschlag finden kann, und eine Klammer (52) zum Halten der Muffe in der Nut auf;

dadurch gekennzeichnet, daß die flache randlose Oberfläche (67) des gegenüberstehenden Armes (33) als U-förmige Plattform zur Stützung des Kopfes (13) des Anhängers durch Anlage an der Oberfläche des Kopfes ausgebildet ist, wenn der Anhänger in der Klammer gehalten wird.

9. Anbringungseinrichtung nach Anspruch 8, zum Installieren einer Identifikationseinrichtung, welche Stifteinrichtungen mit einem Stempel aufweist, der mit einer Basisplatte an einem Ende sowie mit einer Schicht weicheren Materials daran versehen ist, wobei beide unterhalb der Basisplatte angeordnet sind, und der Teil der Basisplatte an dem Ohr o.dgl. eingreifen kann, dadurch gekennzeichnet, daß die Arme so konstruiert und angeordnet sind, daß die Ebene der Plattform des einen Arms von der Ebene der zweiten Plattform des entgegengesetzten Armes in einer Richtung weg von der Schwenkachse der Arme divergiert, wenn die Arme vor Installieren der Identifikationseinrichtung voneinander abstehen, und daß die Ebenen der Plattformen in Richtung weg von der Schwenkachse konvergieren, wenn die Arme in geschlossener Stellung sind.

**Revendications**

1. Etiquette (T) d'identification pour animaux, destinée à être utilisée avec un dispositif de fixation (P) possédant une tige (18) surmontée d'un élément de forme général conique (17) et comportant des moyens pour pénétrer dans une oreille ou une autre partie d'un animal pour la fixation de ladite étiquette à ladite partie dudit animal, et incluant un corps comportant au moins une zone (11), sur laquelle des marques peuvent être apposées, une douille (14), qui s'étend latéralement à partir dudit corps et possède un renfoncement (16) situé au voisinage de l'extrémité extérieure de ladite douille, ledit corps et ladite douille possédant un trou (15), qui communique avec ledit évidement (16) dans lequel ledit élément de forme générale conique dudit dispositif de fixation peut être déplacé après avoir perforé l'oreille ou l'autre partie dudit animal, ladite étiquette étant caractérisée en ce que le côté de l'étiquette situé à l'opposé de la douille comporte une surface ondulée régulière (figure 3) possédant un pourtour extérieur, ladite surface comportant des nervures (21) s'étendant radialement vers l'extérieur et contiguës à des parties en creux (20) s'étendant radialement vers l'extérieur, les nervures étant adaptées de manière à s'appliquer contre l'oreille ou l'autre partie de l'animal de manière à supporter l'étiquette, et lesdites nervures et lesdites parties en creux s'étendant toutes en direction du pourtour extérieur de ladite surface, ce qui a pour effet que les parties en creux forment des passages d'air dans le pourtour extérieur du côté de l'étiquette lorsque les nervures sont repoussées contre ladite oreille, les parties en creux et les nervures étant réunies par des transitions douces définissant ladite surface ondulée régulière.

2. Dispositif à broche (P) servant à fixer une étiquette (T) d'identification pour animaux à une oreille ou une partie semblable du corps d'un animal, incluant une pointe conique (17), qui est située sur l'extrémité d'une tige (18) et dont l'extrémité la plus large possède un diamètre supérieur à celui de ladite tige, ce qui permet à ladite pointe et ladite tige de traverser une orielle ou une partie analoque d'une animal et de venir engager des moyens récepteurs de ladite étiquette d'identification de l'animal, qui est alors retenue sur le côté opposé de l'oreille ou analoque par ledit dispositif de fixation, ladite pointe ou ladite tige étant réalisée en un matériau relativement dur, une base (19) s'étendant transversalement par rapport à ladite tige et possédant au moins une couche d'un matériau plus mou que ladite tige et apte à venir en contact avec l'oreille ou la partie analogue dudit animal, un bouton (24) solidaire de ladite tige étant prévu sur l'extrémité située à l'opposé de la pointe conique et étant réalisé en un matériau relativement dur, ce dispositif étant caractérisé en ce que ledit bouton (24) possède une dimension supérieure à ladite extrémité la plus large et comporte des trous (26) le traversant en direction de l'extérieur à partir de ladite tige de ladite pointe, ladite base étant moulés directement autour du bouton de telle sorte que le matériau plus mou entoure le bouton et remplit les trous ménagés dans le bouton en contribuant ainsi à assurer la stabilité de la broche.

3. Dispositif de fixation selon la revendication 2, dans lequel ledit matériau relativement dur et ledit matériau plus mou sont tous deux constitués par une matière plastique.

4. Dispositif de fixation selon la revendication 2, dans lequel ladite tige comporte une gorge annulaire (25) adjacente audit bouton.

5. Dispositif de fixation selon la revendication 2, dans lequel la surface dudit bouton, située à l'opposé de ladite tige, possède une forme générale convexe.

6. Dispositif de fixation selon la revendication 2, dans lequel ladite base possède une forme générale circulaire.

7. Dispositif selon la revendication 2, dans lequel ladite base comporte une partie d'une étiquette possédant au moins une surface permettant d'y apposer des marques.

8. Applicateur pour la mise en place d'un dispositif d'identification dans une oreille (10) ou une partie analogue d'un animal, ledit dispositif incluant des moyens en forme de broche comportant une tige (18) pourvue d'une base (19) à une extrémité et d'une pointe conique (17) à l'extrémité opposée, l'extrémité la plus large de ladite pointe conique étant d'un diamètre supérieur à celui de ladite tige, et des moyens en forme d'étiquette (T) possédant une tête (13) raccordée à un corps (11) s'étendant latéralement à partir de ladite tête et une douille cylindrique extérieure (14) possédant des dimensions latérales inférieures à celles de ladite tête, ladite tête (13) comportant un trou (15), à travers lequel ladite pointe conique (17) et ladite tige (18) peuvent être déplacées, et ladite douille (14) comportant un évidement (16) servant à recevoir ladite pointe conique (17), ledit applicateur comprenant un couple de bras (32, 33), dont chacun est raccordé à une poignée (34, 35) et est monté pivotant de telle sorte que lesdites bras (32, 33) peuvent être déplacés par pivotement entre des positions correspondant d'une manière générale à l'état ouvert et à l'état fermé, au moyen desdites poignées (34, 35), l'une desdits bras (32) comportant sur son extrémité extérieure une plate-forme (60) destinée à recevoir la base (19) desdits moyens en forme de broche, et des moyens en forme de pince (39), repoussés élastiquement et servant à maintenir ladite base (19) desdits moyens en forme de broche sur ladite plate-forme (60), ladite plateforme comportant des moyens de butée (63) pour ladite base (19) desdits moyens en forme de broche, servant à positionner ladite base (19) dans la direction longitudinale dudit bras (32), et lesdits moyens en forme de pince comportant une fente (46) servant à positionner ladite tige et ladite pointe dans une direction transversale par rapport audit bras (32), le bras opposée (33) comportant, au niveau de son extrémité extérieure, une partie longitudinale en forme de U comportant une surface plate (67), sans rebord, tournée vers la plate-forme (60) du premier bras (32), une rainure longitudinale servant à recevoir la douille (14) de l'étiquette, un épaulement (65) situé dans le fond de la gorge et contre lequel l'extrémité de la douille (14) de l'étiquette peut venir en butée, et une pince (52) servant à maintenir la douille dans la gorge, caractérisé en ce que:

ladite surface plane (67) sans rebord dudit bras opposé (33) est une plate-forme en forme de U destinée à supporter la tête (13) de l'étiquette, par suite de la venue en contact de cette surface avec la surface de la tête lorsque ladite étiquette est maintenue par ladite pince.

9. Applicateur selon la revendication 8, pou la mise en place d'une dispositif d'identification incluant des moyens en forme de broche possédant une tige comportant, à une extrémité, une base et garnie d'une couche d'un matériau plus mou à la fois au-dessous de ladite base et de la partie de ladite base pouvant s'appliquer contre ladite oreille ou analogue, caratérisé en ce que:

lesdits bras sont constitués et agencés de manière que le plan de ladite plate-forme dudit bras s'écarte du plan de ladite seconde plate-forme dudit bras opposé dans une direction s'écartant de l'axe de pivotement dudit bras lorsque ces derniers sont écartés avant la mise en place dudit dispositif d'identification; et

les plans desdites plates-formes convergent dans ladite direction à partir dudit axe de pivotement lorsque lesdites bras sont dans une position fermée.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 16

FIG. 15

FIG. 14

FIG. 13

EP 0 116 601 B1